# EUROPEAN PATENT APPLICATION

(11) **EP 4 790 282 A1**
(43) Date of publication of application: **12.08.2026**
(21) Application number: 25869670.7
(22) Date of filing: 16.12.2025
(51) Int. Cl.: F16K 11/072, F25B 41/26

(54) **FLOW PASSAGE SWITCHING VALVE**

(30) Priority: 17.12.2024 JP 2024221128
(71) Applicant: DAIKIN INDUSTRIES, LTD., Osaka-Shi, Osaka 530-0001 (JP)
(72) Inventor: OKUNO, Masato, Osaka-shi, Osaka 530-0001 (JP); HARAGUCHI, Yuu, Osaka-shi, Osaka 530-0001 (JP)
(74) Representative: Hoffmann Eitle
(86) International application number: PCT/JP2025/043961
(87) International publication number: WO 2026/134228

(57) **Abstract**

A flow path switching valve having a small pressure loss is provided. A flow path switching valve (100) includes a body casing (120) having a first end (125a) and a second end (125b), in which a first space (V1) is formed inside, and a first port (130a), a second port (130b), and a third port (130c) are provided on an outer surface (124), and a valve body disposed inside the first space. The state of the valve body is switched between a first state in which the first port and the second port are connected and a second state in which the first port and the third port are connected. The second port and the third port are disposed at the first end of the body casing, and the first port is disposed at the second end of the body casing.

## Description

### TECHNICAL FIELD

The present disclosure relates to a flow path switching valve.

### BACKGROUND ART

A refrigeration cycle apparatus may be provided with a flow path switching valve for purposes such as controlling a refrigerant flowing through a heat exchanger (for example, Patent Literature 1 (Japanese Laid-Open Patent Publication No. 2010-112517)).

### SUMMARY OF THE INVENTION

### <Technical Problem>

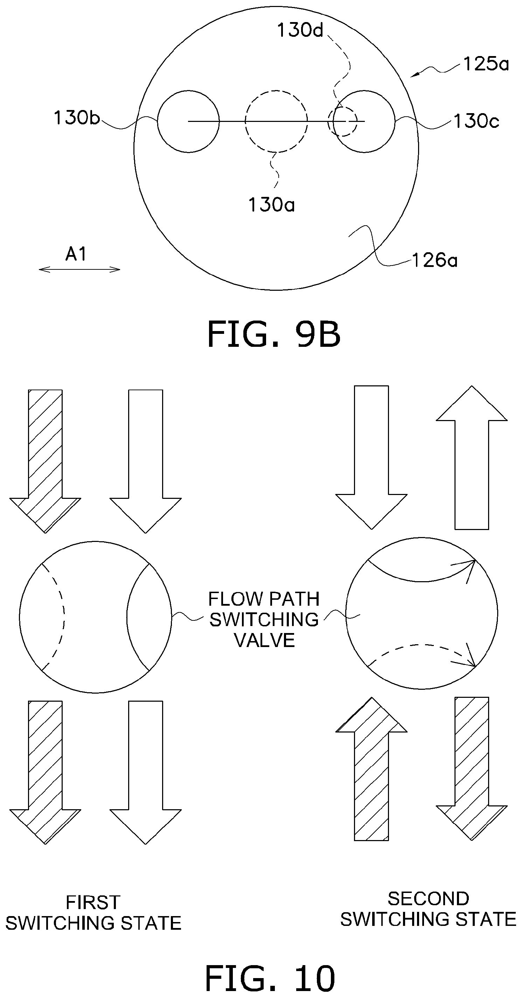

Conventionally, in such a flow path switching valve, a refrigerant flows in the flow path switching valve in a manner shown in FIG. 10, for example. As can be seen from FIG. 10, in the conventional flow path switching valve, depending on the connection state of the flow path (in the second switching state in FIG. 10), a reversal of the refrigerant flow occurs in the flow path switching valve. As described above, when the reversal of the refrigerant flow occurs in the flow path switching valve, the Cv value of the flow path switching valve decreases, and a relatively large pressure loss may occur in the flow path switching valve.

### <Solution to Problem>

A flow path switching valve according to a first aspect includes a body casing and a valve body. A first space is formed inside the body casing. A first port, a second port, and a third port configured as inlet and outlet ports for a refrigerant are provided on an outer surface of the body casing. The valve body is disposed inside the first space. The state of the valve body is switched between a first state and a second state. When the state of the valve body is the first state, the first port and the second port are connected. When the state of the valve body is the second state, the first port and the third port are connected. The second port and the third port are disposed at a first end of the body casing. The first port is disposed at a second end of the body casing.

In the flow path switching valve according to the first aspect, even when the state of the valve body is switched between the first state and the second state, the refrigerant flowing into or out of the first port always flows along the same direction. In the flow path switching valve according to the first aspect, the refrigerant flowing into or out of the first port does not reverse and flow in the flow path switching valve, and an increase in pressure loss associated with the refrigerant reversing and flowing in the flow path switching valve can be suppressed.

A flow path switching valve according to a second aspect is the flow path switching valve according to the first aspect, in which a first internal port communicating with the first port, a second internal port communicating with the second port, and a third internal port communicating with the third port are provided on a wall surface defining the first space of the body casing. When the first internal port, the second internal port, and the third internal port are viewed from a third direction, at least a part of the first internal port is disposed between an imaginary line passing through a center of an opening of the second internal port and extending in a second direction and an imaginary line passing through a center of an opening of the third internal port and extending in the second direction. The third direction is a direction orthogonal to a first direction in which the second internal port and the third internal port are arranged side by side and orthogonal to the second direction in which the first end and the second end are arranged.

In the flow path switching valve according to the second aspect, by disposing the first port to the third port so as to satisfy the above state, the refrigerant can flow smoothly (without detouring) through an flow path inside in the first state and the second state, and the pressure loss in the flow path switching valve can be reduced.

A flow path switching valve according to a third aspect is the flow path switching valve according to the second aspect, in which the valve body forms a first flow path through which the medium flows. The first flow path includes an internal flow path formed inside the valve body. The flow path switching valve further includes a seal member provided so as to surround each of an opening of the first internal port, an opening of the second internal port, and an opening of the third internal port. The seal member is configured to seal between the opening and the valve body when the first internal port, the second internal port, and the third internal port are connected to the internal flow path.

In the flow path switching valve according to the third aspect, it is possible to suppress occurrence of a situation in which the refrigerant flows from the internal port to which the internal flow path is connected to the first space around the valve body or the refrigerant flows from the first space around the valve body to the internal port to which the internal flow path is connected.

A flow path switching valve according to a fourth aspect is the flow path switching valve according to the first or second aspect, in which a fourth port configured as an inlet and outlet port for the medium is further provided on the outer surface of the body casing. The valve body forms a first flow path and a second flow path through which the medium flows. The first flow path connects the first port and the second port when the valve body is in the first state, and connects the first port and the third port when the valve body is in the second state. The second flow path connects the fourth port and the third port when the valve body is in the first state, and connects the fourth port and the second port when the valve body is in the second state.

A flow path switching valve according to a fifth aspect is the flow path switching valve according to the fourth aspect, in which the first flow path includes an internal flow path formed inside the valve body. The second flow path is formed in the first space.

In the flow path switching valve according to the fifth aspect, the second flow path formed outside the valve body is used as a refrigerant flow path in addition to the first flow path including the internal flow path formed inside the valve body, so that the valve body can be downsized and a compact flow path switching valve can be achieved.

A flow path switching valve according to a sixth aspect is the flow path switching valve according to the fourth or fifth aspect, in which the fourth port is provided at the second end of the body casing.

In the flow path switching valve according to the sixth aspect, the refrigerant flowing into or out of the fourth port constantly flows along the same direction between the first end and the second end. Therefore, in the flow path switching valve according to the sixth aspect, the refrigerant flowing into or out of the fourth port does not reverse and flow in the flow path switching valve, and an increase in pressure loss associated with the refrigerant reversing and flowing in the flow path switching valve can be suppressed.

A flow path switching valve according to a seventh aspect is the flow path switching valve according to the sixth aspect, in which the second port and the third port are arranged side by side in a fourth direction at the first end of the body casing. The first port and the fourth port are arranged side by side in a direction intersecting the fourth direction at the second end of the body casing.

In the flow path switching valve according to the seventh aspect, the first port to the fourth port are disposed to satisfy the above condition, so that the refrigerant can smoothly flow through the internal flow path (without detouring) when the valve body is in the first state and the second state, and the pressure loss in the flow path switching valve can be reduced.

A flow path switching valve according to an eighth aspect is the flow path switching valve according to any one of the fourth to seventh aspects, in which an inner diameter of the fourth port is smaller than an inner diameter of the first port.

In the flow path switching valve according to the eighth aspect, since the inner diameter of the fourth port is smaller than that of the first port, the degree of freedom in arrangement of the fourth port can be increased. Further, by reducing the diameter of a refrigerant pipe communicating with the fourth port in accordance with the inner diameter of the fourth port, the degree of freedom of a pipe path of a refrigerant pipe connected to the flow path switching valve can be increased.

A flow path switching valve according to a ninth aspect is the flow path switching valve according to any one of the fourth to eighth aspects, in which the body casing has a tubular shape having a first surface provided at the first end and a second surface provided at the second end. The second port and the third port are disposed on the first surface. The first port and the fourth port are disposed on the second surface.

In the flow path switching valve according to the ninth aspect, it is possible to achieve a compact flow path switching valve capable of suppressing an increase in pressure loss.

A flow path switching valve according to a tenth aspect is the flow path switching valve according to any one of the fourth to eighth aspects, further including a drive unit configured to drive the valve body to switch a state of the valve body between the first state and the second state. The second port and the third port are disposed on a first surface provided at the first end of the body casing. The first port and the fourth port are disposed on a second surface provided at the second end of the body casing. The drive unit is disposed on a surface different from the first surface and the second surface of the outer surface of the body casing.

In the flow path switching valve according to the tenth aspect, a compact flow path switching valve can be achieved.

A flow path switching valve according to an eleventh aspect is the flow path switching valve according to any one of the first to ninth aspects, further including a drive unit configured to drive the valve body to switch a state of the valve body between the first state and the second state.

A flow path switching valve according to a twelfth aspect is the flow path switching valve according to the tenth or eleventh aspect, in which the drive unit is configured to rotate the valve body around a rotation axis to switch a state of the valve body between the first state and the second state.

In the flow path switching valve according to the twelfth aspect, the flow path switching valve having a relatively simple structure can implement different connection states of the flow paths.

A flow path switching valve according to a thirteenth aspect is the flow path switching valve according to any one of the first to twelfth aspects, in which the valve body has a ball shape in which at least a part of an outer surface is a spherical surface.

### BRIEF DESCRIPTION OF THE DRAWINGS

FIG. 1 is a schematic configuration diagram of a refrigeration cycle apparatus including a flow path switching valve according to an embodiment of the present disclosure.
FIG. 2 is a schematic external view of a flow path switching valve of the air conditioner in FIG. 1.
FIG. 3 is a side view illustrating the inside of the flow path switching valve.
FIG. 4 is another side view of in which the inside of the flow path switching valve as viewed from a direction different from that of FIG. 3.
FIG. 5A is a view of a valve body of the flow path switching valve as viewed from a side opposite to a flat surface portion of the flow path switching valve.
FIG. 5B is a view of the valve body of FIG. 5A as viewed from a direction different from that of FIG. 5A.
FIG. 6A is a schematic view illustrating the inside of the flow path switching valve when the state of the valve body is a first state.
FIG. 6B is a schematic view illustrating the inside of the flow path switching valve when the state of the valve body is a second state.
FIG. 7A is a diagram showing a flow of a refrigerant in a refrigerant circuit during cooling operation.
FIG. 7B is a diagram showing the flow of the refrigerant in the refrigerant circuit during heating operation.
FIG. 8A is an example of an arrangement of ports in which the flow of the refrigerant flowing through an internal flow path and the flow of the refrigerant flowing through a second flow path do not intersect when the valve body is in either the first state or the second state, and the flow of the refrigerant in the first state is indicated with a two-dot chain line and a one-dot chain line.
FIG. 8B is an example of an arrangement of ports in which the flow of the refrigerant flowing through the internal flow path and the flow of the refrigerant flowing through the second flow path do not intersect when the valve body is in either the first state or the second state, and the flow of the refrigerant in the second state is indicated with a two-dot chain line and a one-dot chain line.
FIG. 9A is an example of an arrangement of ports in which the flow of the refrigerant flowing through the internal flow path and the flow of the refrigerant flowing through the second flow path intersect depending on the state of the valve body, and the flow of the refrigerant in the first state is indicated with a two-dot chain line and a solid line.
FIG. 9B is an example of the arrangement of ports in which the flow of the refrigerant flowing through the internal flow path and the flow of the refrigerant flowing through the second flow path intersect depending on the state of the valve body, and the flow of the refrigerant in the second state is indicated with a two-dot chain line and a solid line.
FIG. 10 is a view for describing the flow of the refrigerant in a conventional flow path switching valve, and is a view illustrating a first connection state in which the refrigerant flows across the flow path switching valve and a second connection state in which the refrigerant reverses and flows in the flow path switching valve.

### DESCRIPTION OF EMBODIMENTS

A flow path switching valve according to an embodiment and a refrigeration cycle apparatus including the same will be described with reference to the drawings.

### (1) Outline

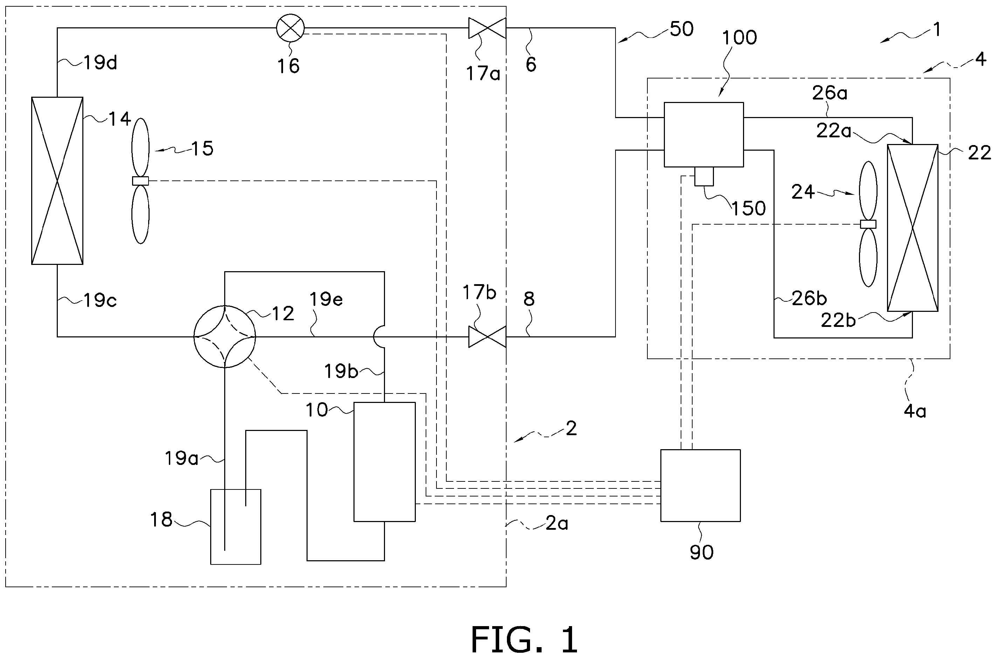

An outline of an air conditioner 1 according to an embodiment of a refrigeration cycle apparatus will be described with reference to FIG. 1. Note that the type of the refrigeration cycle apparatus is not limited to the air conditioner, and may be another type of apparatus that cools and heats a target using a vapor compression refrigeration cycle.

The air conditioner 1 cools and heats an interior (air conditioning target space) of a house, a building, or the like. The air conditioner 1 mainly includes a heat source unit 2, a utilization unit 4, and a control unit 90 (see FIG. 1). Note that, in the example of FIG. 1, the number of utilization units 4 is one, but the number of utilization units 4 may be plural.

As shown in FIG. 1, the heat source unit 2 and the utilization units 4 are connected by connection pipes 6 and 8. In the air conditioner 1, the heat source unit 2 and the utilization unit 4 are connected through the connection pipes 6 and 8 to constitute a refrigerant circuit 50. The refrigerant circuit 50 includes a compressor 10, a flow path switching mechanism 12, a heat source heat exchanger 14, an expansion valve 16, an accumulator 18, a liquid shutoff valve 17a, a gas shutoff valve 17b, a utilization heat exchanger 22, and a flow path switching valve 100. The flow path switching valve 100 is a device that causes the refrigerant to flow in the same direction in the utilization heat exchanger 22 during cooling operation and heating operation.

The refrigerant circuit 50 is filled with a refrigerant having a temperature glide such as, but not limited to, R454C. However, the refrigerant charged in the refrigerant circuit 50 is not limited to the refrigerant of R454C. Further, the refrigerant charged in the refrigerant circuit 50 is not limited to a refrigerant having a temperature glide. The refrigerant to be charged in the refrigerant circuit 50 may be appropriately selected.

### (2) Detailed configuration

### (2-1) Heat source unit

The heat source unit 2 is installed on a rooftop, a machine room, or the like of a building where the air conditioner 1 is installed.

As shown in FIG. 1, the heat source unit 2 mainly includes the compressor 10, the flow path switching mechanism 12, the heat source heat exchanger 14, the expansion valve 16, the accumulator 18, the liquid shutoff valve 17a, the gas shutoff valve 17b, and a heat source fan 15. The various devices 10, 12, 14, 16, 18, 17a, 17b, and 15 of the heat source unit 2 are housed in a housing 2a.

A suction pipe 19a connects the flow path switching mechanism 12 and the suction side of the compressor 10. The suction pipe 19a is provided with the accumulator 18. A discharge pipe 19b connects a discharge side of the compressor 10 and the flow path switching mechanism 12. A first gas pipe 19c connects the flow path switching mechanism 12 and a gas side end of the heat source heat exchanger 14. A liquid pipe 19d connects the liquid side end of the heat source heat exchanger 14 and the liquid connection pipe 6. The expansion valve 16 is provided in the liquid pipe 19d. The liquid shutoff valve 17a is provided at a connection portion between the liquid pipe 19d and the liquid connection pipe 6. A second gas pipe 19e connects the flow path switching mechanism 12 and the gas connection pipe 8. The gas shutoff valve 17b is provided at a connection portion between the second gas pipe 19e and the gas connection pipe 8. The liquid shutoff valve 17a and the gas shutoff valve 17b are manually opened and closed, and are opened when the air conditioner 1 is in operation.

The compressor 10 sucks a low-pressure refrigerant in a refrigeration cycle from the suction pipe 19a, compresses the refrigerant by a compression mechanism (not shown), and discharges the compressed high-pressure refrigerant in the refrigeration cycle to the discharge pipe 19b. The compressor 10 is not limited in terms of a type, and is, for example, a rotary type or scroll type positive displacement compressor. The compression mechanism of the compressor 10 is driven by a motor (not shown). The compressor 10 is an inverter compressor. However, the compressor 10 may be a constant-speed compressor.

The flow path switching mechanism 12 switches a flow path of the refrigerant between a first circuit state and a second circuit state. In other words, the flow path switching mechanism 12 switches the destination of the refrigerant to be discharged from the compressor between the heat source heat exchanger 14 and the utilization heat exchanger 22. In the first circuit state, the flow path switching mechanism 12 causes the suction pipe 19a to communicate with the second gas pipe 19e and causes the discharge pipe 19b to communicate with the first gas pipe 19c as indicated by a solid line in the flow path switching mechanism 12 in FIG. 1. In the second circuit state, the flow path switching mechanism 12 causes the suction pipe 19a to communicate with the first gas pipe 19c and causes the discharge pipe 19b to communicate with the second gas pipe 19e as indicated by a broken line in the flow path switching mechanism 12 in FIG. 1.

A type of the flow path switching mechanism 12 is not limited, and is, for example, a four-way switching valve (electromagnetic operation valve, electromagnetic pilot switching valve, or the like). However, it is not limited thereto, and the flow path switching mechanism 12 may be a mechanism that includes a plurality of electromagnetic valves connecting pipes and switches the flow path of the refrigerant between the first circuit state and the second circuit state by operating the plurality of electromagnetic valves.

The flow path switching mechanism 12 brings the flow path of the refrigerant into the first circuit state during the cooling operation. At this time, the refrigerant discharged from the compressor 10 flows through the refrigerant circuit 50 in the order of the heat source heat exchanger 14, the expansion valve 16, the flow path switching valve 100, the utilization heat exchanger 22, and the flow path switching valve 100, and returns to the compressor 10. In the first circuit state, the heat source heat exchanger 14 functions as a radiator (condenser), and the utilization heat exchanger 22 functions as a heat absorber (evaporator).

The flow path switching mechanism 12 brings the flow path of the refrigerant into the second circuit state during the heating operation. At this time, the refrigerant discharged from the compressor 10 flows through the refrigerant circuit 50 through the flow path switching valve 100, the utilization heat exchanger 22, the flow path switching valve 100, the expansion valve 16, and the heat source heat exchanger 14 in this order, and returns to the compressor 10. In the second circuit state, the heat source heat exchanger 14 functions as a heat absorber (evaporator), and the utilization heat exchanger 22 functions as a radiator (condenser).

The heat source heat exchanger 14 causes heat exchange between the refrigerant flowing inside the heat source heat exchanger 14 and air around the heat source unit 2. The heat source heat exchanger 14 is, for example, a fin-and-tube heat exchanger including a plurality of heat transfer fins and a plurality of heat transfer tubes. Note that the substance with which the refrigerant exchanges heat in the heat source heat exchanger 14 is not limited to air, and may be liquid such as water. In a case where the refrigerant exchanges heat with a liquid, a heat exchanger of a type suitable for heat exchange between the liquid and the refrigerant may be selected as the heat source heat exchanger 14.

The expansion valve 16 is a mechanism for adjusting the pressure and flow rate of the refrigerant flowing through the liquid pipe 19d. The expansion valve 16 is provided in the liquid pipe 19d. The expansion valve 16 is, for example, an electric valve (electronic expansion valve) whose opening degree can be adjusted. However, the type of the expansion valve 16 is not limited to the electric valve, and may be an automatic temperature expansion valve or the like.

The accumulator 18 is a container provided in the suction pipe 19a and having a gas-liquid separation function of separating an inflowing refrigerant into a gas refrigerant and a liquid refrigerant. A refrigerant flowing into the accumulator 18 is separated into a gas refrigerant and a liquid refrigerant, and the gas refrigerant collected in an upper space flows into the compressor 10.

The heat source fan 15 supplies air as a heat source around the heat source unit 2 to the heat source heat exchanger 14. The heat source fan 15 is, for example, an axial fan such as a propeller fan although the type of the fan is not limited. The heat source fan 15 is driven by a motor (not shown).

The heat source unit 2 further includes a heat source control unit (not shown). The heat source control unit includes a control calculation device and a storage device. The control calculation device is a processor such as a CPU and a GPU. The storage device is a storage medium such as a RAM, a ROM, or a flash memory. The control calculation device reads a program stored in the storage device and performs predetermined calculation processing according to the program, thereby controlling operations of various devices of the air conditioner 1 as the control unit 90 in cooperation with a utilization control unit (not shown) of the utilization unit 4. The functions of the control unit 90 will be described later.

### (2-2) Utilization Unit

The utilization unit 4 is installed in the air conditioning target space to be airconditioned. The utilization unit 4 is a ceiling-embedded unit, a ceiling pendant unit, a wallhung unit, a floor-standing unit, or the like.

As shown in FIG. 1, the utilization unit 4 mainly includes a utilization heat exchanger 22, a utilization fan 24, and a flow path switching valve 100. The utilization heat exchanger 22, the utilization fan 24, and the flow path switching valve 100 are housed in a housing 4a.

The utilization heat exchanger 22 causes heat exchange between the refrigerant flowing inside the utilization heat exchanger 22 and air in the air conditioning target space. The utilization heat exchanger 22 is, for example, a fin-and-tube heat exchanger including a plurality of heat transfer fins and a plurality of heat transfer tubes.

The utilization heat exchanger 22 includes a first connection portion 22a and a second connection portion 22b configured as inlet and outlet ports for the refrigerant. By switching the flow path by the flow path switching valve 100 described later, the refrigerant flows into the utilization heat exchanger 22 from the first connection portion 22a and flows out from the second connection portion 22b both during the cooling operation and during the heating operation. By causing the refrigerant to flow through the utilization heat exchanger 22 in the same direction, it is possible to implement a state in which the flow direction of the air formed by the utilization fan 24 and the flow direction of the refrigerant are opposite flows regardless of either in the cooling operation or the heating operation. As a result, the heat exchange efficiency of the utilization heat exchanger 22 can be maintained high in both the cooling operation and the heating operation.

The utilization fan 24 supplies the air taken in from the air conditioning target space to the utilization heat exchanger 22. Examples of the utilization fan 24 include a centrifugal fan such as a turbo fan and a sirocco fan. The utilization fan 24 is driven by a motor (not shown).

The flow path switching valve 100 switches the flow direction of the refrigerant in the utilization heat exchanger 22. Specifically, the flow path switching valve 100 controls the flow of the refrigerant so that the refrigerant flows in from the first connection portion 22a of the utilization heat exchanger 22 and flows out from the second connection portion 22b of the utilization heat exchanger 22 during both the cooling operation and the heating operation.

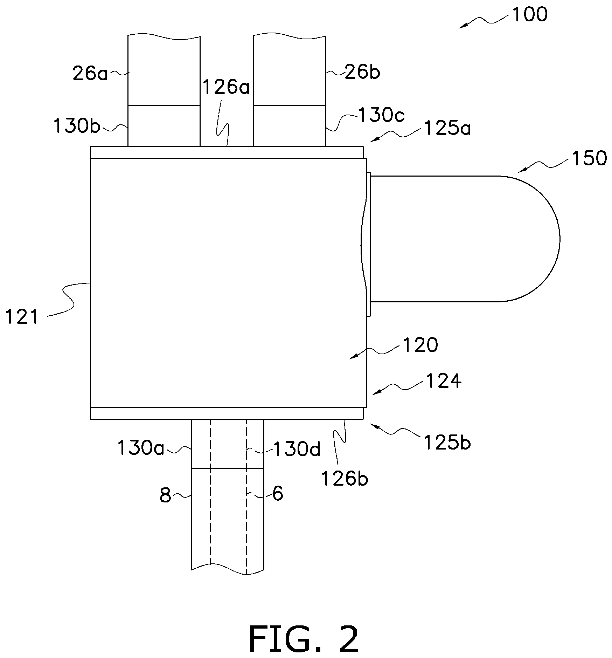

A first port 130a, a second port 130b, a third port 130c, and a fourth port 130d to which pipes are connected are provided on an outer surface of the flow path switching valve 100 (an outer surface 124 of a body casing 120 of the flow path switching valve 100 to be described later) (see FIG. 2). The first port 130a, the second port 130b, the third port 130c, and the fourth port 130d are connection portions to which pipes are connected, and are inlet and outlet ports for the refrigerant. The gas connection pipe 8 is connected to the first port 130a (directly or via other piping). One end of the first pipe 26a is connected to the second port 130b. The other end of the first pipe 26a is connected to the first connection portion 22a of the utilization heat exchanger 22. One end of the second pipe 26b is connected to the third port 130c. The other end of the second pipe 26b is connected to the second connection portion 22b of the utilization heat exchanger 22. The liquid connection pipe 6 is connected to the fourth port 130d (directly or via other piping).

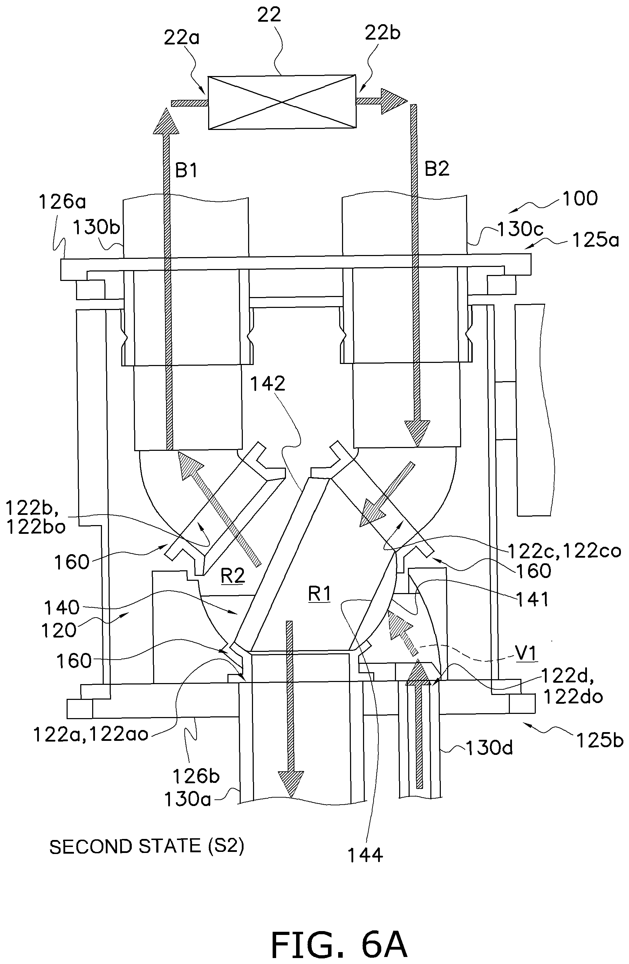

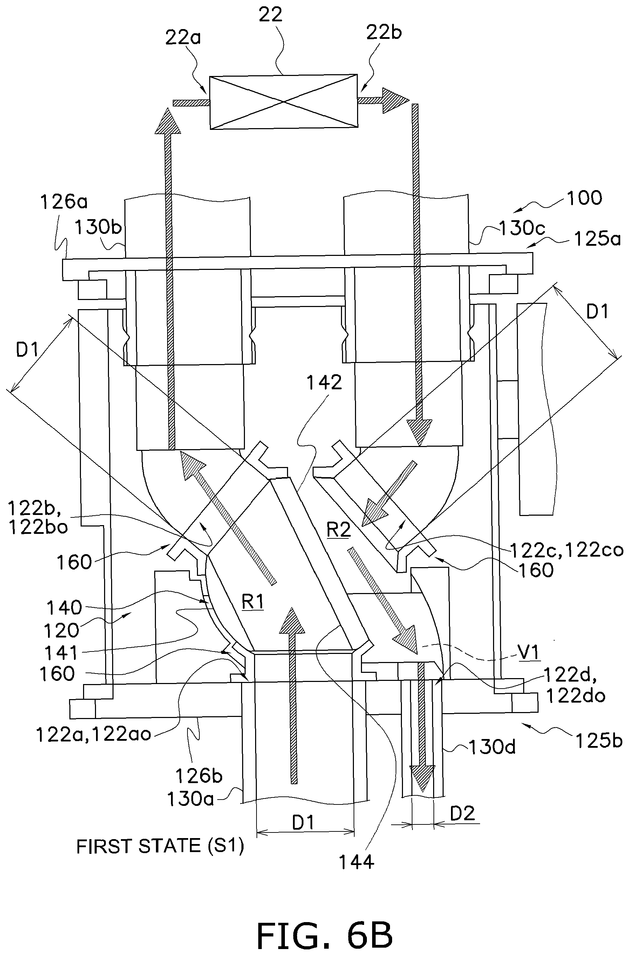

Since the second port 130b communicates with the first connection portion 22a configured as an inlet port of the refrigerant of the utilization heat exchanger 22, the refrigerant always flows in the same first flow direction B1 in the second port 130b (see FIGS. 6A and 6B). Since the third port 130c communicates with the second connection portion 22b configured as an outlet port of the refrigerant of the utilization heat exchanger 22, the refrigerant always flows in the same second flow direction B2 in the third port 130c (see FIGS. 6A and 6B).

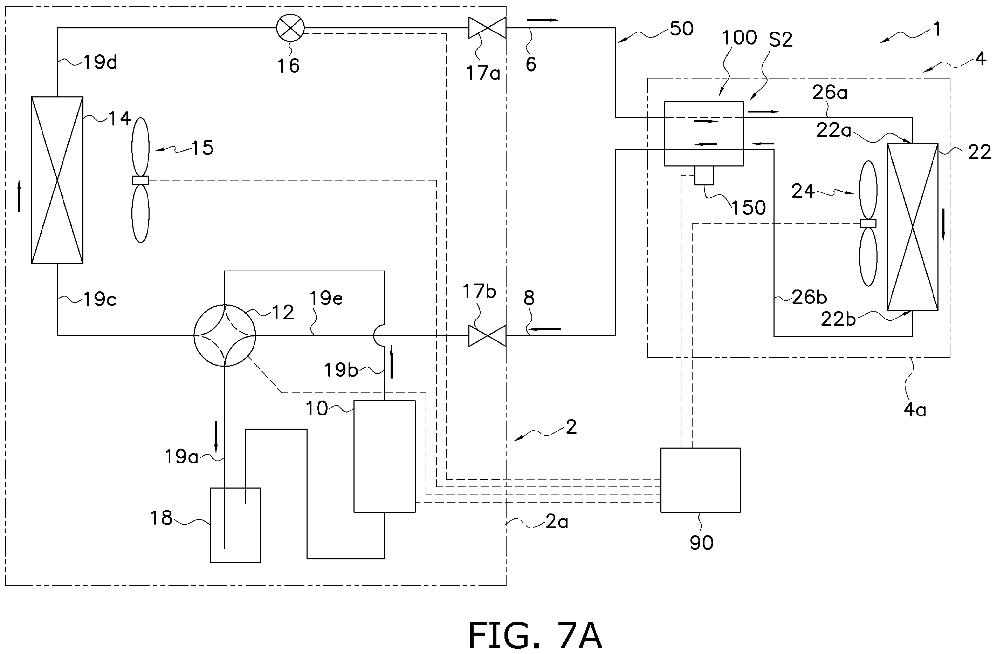

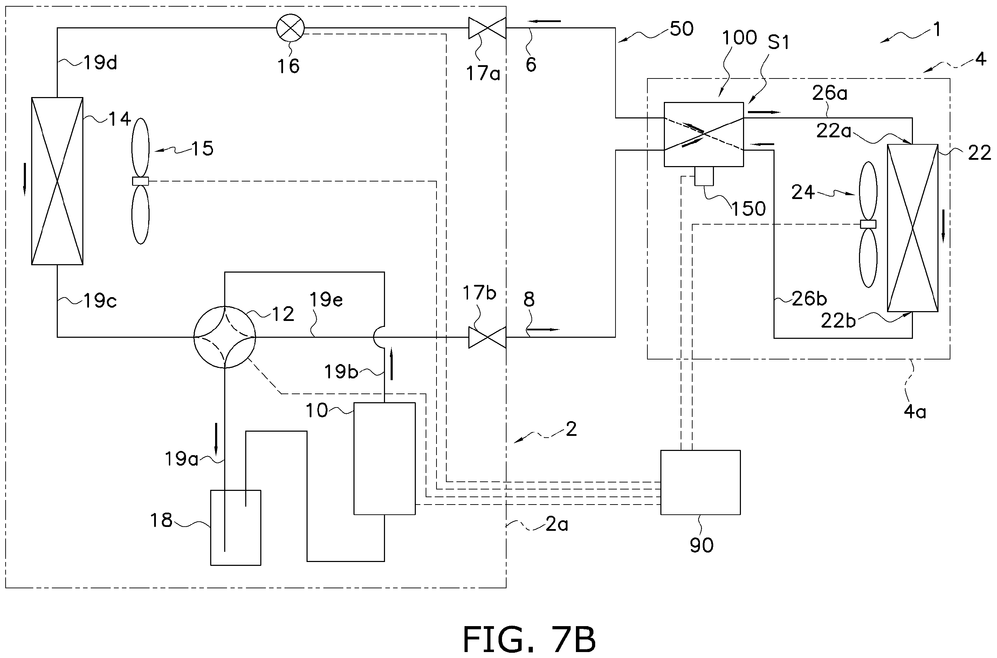

During the cooling operation, the flow path switching valve 100 causes the liquid connection pipe 6 and the first pipe 26a to communicate with each other, and causes the second pipe 26b and the gas connection pipe 8 to communicate with each other (see a solid line and a broken line in the flow path switching valve 100 of FIG. 7A). During the heating operation, the flow path switching valve 100 causes the liquid connection pipe 6 and the second pipe 26b to communicate with each other, and causes the first pipe 26a and the gas connection pipe 8 to communicate with each other (see a solid line and a broken line in the flow path switching valve 100 in FIG. 7B).

A specific example of the structure of the flow path switching valve 100 will be described later.

The utilization unit 4 further includes a utilization control unit (not shown). The utilization control unit includes a control calculation device and a storage device. The control calculation device is a processor such as a CPU and a GPU. The storage device is a storage medium such as a RAM, a ROM, or a flash memory. The control calculation device reads a program stored in the storage device, and performs predetermined calculation processing according to the program, thereby controlling the operation of the various devices of the air conditioner 1 as the control unit 90 in cooperation with the heat source control unit of the heat source unit 2. The functions of the control unit 90 will be described later.

### (2-2-1) Details of flow path switching valve

A specific example of the structure of the flow path switching valve 100 will be described with reference to the drawings.

As shown in FIGS. 2 to 4, the flow path switching valve 100 mainly includes a body casing 120, a valve body 140, a drive unit 150, a transmission unit 155, and a seal member 160.

The body casing 120 has a cylindrical outer shape. The body casing 120 extends between a first end 125a and a second end 125b in the axial direction of the cylinder. The direction in which the first end 125a and the second end 125b are aligned (the axial direction of the cylinder of the body casing 120) is referred to as a third arrangement direction A3. Note that the shape of the body casing 120 may be appropriately determined, and is not limited to a cylindrical shape. For example, the outer shape of the body casing 120 may be a shape other than the cylindrical shape (for example, a tubular shape such as a square cylindrical shape (rectangular parallelepiped shape)).

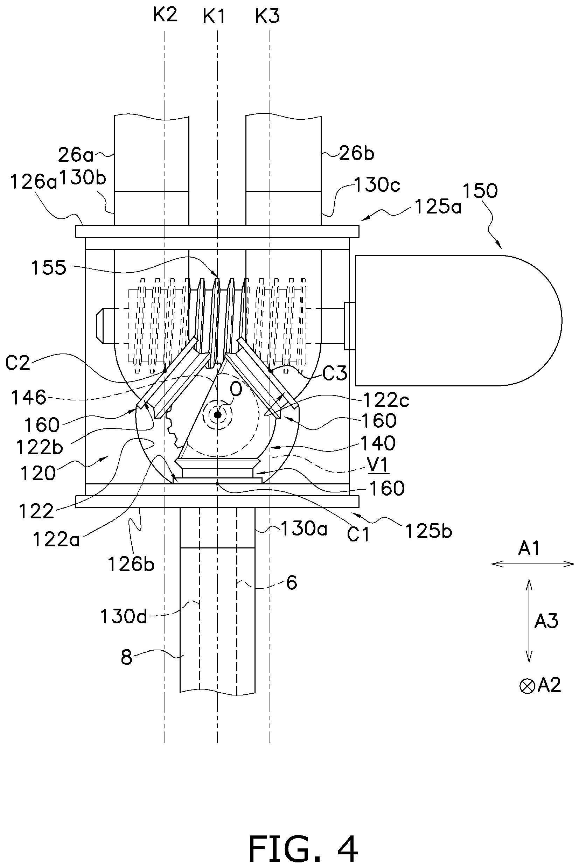

The first port 130a, the second port 130b, the third port 130c, and the fourth port 130d configured as inlet and outlet ports for the refrigerant as an example of a medium are provided on the outer surface 124 of the body casing 120 (see FIG. 2). In the present embodiment, the first port 130a and the fourth port 130d are provided on the second end surface 126b, which is an example of a second surface in the claims, of the second end 125b of the cylindrical body casing 120. The second end surface 126b is not limited, but may be a flat surface. In addition, the second port 130b and the third port 130c are provided on a first end surface 126a, which is an example of a first surface in the claims, of the first end 125a of the cylindrical body casing 120. The first end surface 126a is not limited, but may be a flat surface. In the present embodiment, as shown in FIG. 4, the second port 130b and the third port 130c are arranged side by side in a predetermined direction (referred to as a first arrangement direction A1) on the first end surface 126a. The first arrangement direction A1 is an example of a fourth direction in the claims. On the second end surface 126b, the first port 130a and the fourth port 130d are arranged side by side in a second arrangement direction A2 (although not limited, here, a direction orthogonal to the first arrangement direction A1, which is a direction perpendicular to the paper surface in FIG. 4) intersecting the first arrangement direction A1. Note that, in FIGS. 6A and 6B, the first port 130a and the fourth port 130d are illustrated in a manner aligned in the same direction as the second port 130b and the third port 130c from the viewpoint of easy understanding of the drawing.

Note that the arrangement of the first port 130a, the second port 130b, the third port 130c, and the fourth port 130d may be appropriately changed. For example, the fourth port 130d may be provided not on the second end surface 126b but on a side surface (curved surface) in the vicinity of the second end 125b of the body casing 120. In addition, for example, the second port 130b and the third port 130c may be arranged side by side along the direction along the first arrangement direction A1.

As shown in FIG. 4, a first space V1 is formed inside the body casing 120. The first space V1 is a space in which the valve body 140 is accommodated. Further, a second flow path R2 through which the refrigerant flows is formed in the first space V1. A first internal port 122a, a second internal port 122b, a third internal port 122c, and a fourth internal port 122d configured as inlet and outlet ports for the refrigerant are provided on the wall surface 122 defining the first space V1 (surrounding the first space V1). Here, the first internal port 122a means a distal end portion of a hole facing the first space V1. The hole seen when the first internal port 122a is viewed from the first space V1 is referred to as an opening 122ao of the first internal port 122a here. The same applies to the second internal port 122b to the fourth internal port 122d.

The first internal port 122a communicates with the first port 130a via a passage (reference numeral is omitted) formed in the body casing 120. The second internal port 122b communicates with the second port 130b via a passage (reference numeral is omitted) formed in the body casing 120. The third internal port 122c communicates with the third port 130c via a passage (reference numeral is omitted) formed in the body casing 120. The fourth internal port 122d communicates with the fourth port 130d via a passage (reference numeral is omitted) formed in the body casing 120.

As can be seen from FIG. 1, the first internal port 122a communicating with the first port 130a connected to the gas connection pipe 8 and the fourth internal port 122d communicating with the fourth port 130d connected to the liquid connection pipe 6 communicate with each other, without via the utilization heat exchanger 22, via the heat source heat exchanger 14 in which the refrigerant flowing inside and the fluid of the heat source exchange heat. The second internal port 122b communicating with the second port 130b to which the first pipe 26a is connected and the third internal port 122c communicating with the third port 130c to which the second pipe 26b is connected communicate with each other via the utilization heat exchanger 22 in which the refrigerant flowing inside and the air in the air conditioning target space exchange heat.

The inner diameter of the first internal port 122a, the inner diameter of the second internal port 122b, and the inner diameter of the third internal port 122c are the same (D1). However, it is not limited thereto, and the inner diameter of the first internal port 122a, the inner diameter of the second internal port 122b, and the inner diameter of the third internal port 122c may be different. Although not limited, the inner diameter (D2) of the fourth internal port 122d through which the liquid refrigerant mainly flows may be smaller than the inner diameter (D1) of the first internal port 122a.

The valve body 140 is disposed in the first space V1 formed by the body casing 120.

The valve body 140 is driven by a motor as an example of the drive unit 150 and rotates around the rotation axis O. The drive unit 150 may be disposed on a surface (in the example of FIG. 2, the side surface 121 of the cylindrical body casing 120) different from the first surface 126a and the second surface 126b of the outer surface 124 of the body casing 120. With such an arrangement of the drive unit 150, the size of the flow path switching valve 100 can be easily reduced (as compared with the case where the drive unit 150 is arranged on the first surface 126a or the second surface 126b).

In the present embodiment, the rotation axis O for rotating the valve body 140 extends in a direction (here, the second arrangement direction A2) orthogonal to the first arrangement direction A1 and the third arrangement direction A3 (see FIG. 4). The first arrangement direction A1 is a direction in which the second internal ports 122b and the third internal ports 122c are arranged side by side. Here, the first arrangement direction A1 is also a direction in which the second port 130b and the third port 130c are arranged side by side as described above. Note that the direction in which the second internal port 122b and the third internal port 122c are arranged and the direction in which the second port 130b and the third port 130c are arranged need not be the same, but when the direction in which the second internal port 122b and the third internal port 122c are arranged and the direction in which the second port 130b and the third port 130c are arranged are made to coincide with each other, the structure of the flow path switching valve 100 is easily simplified. As described above, the third arrangement direction A3 is a direction in which the first end 125a and the second end 125b are aligned (the height direction of the cylindrical body casing 120).

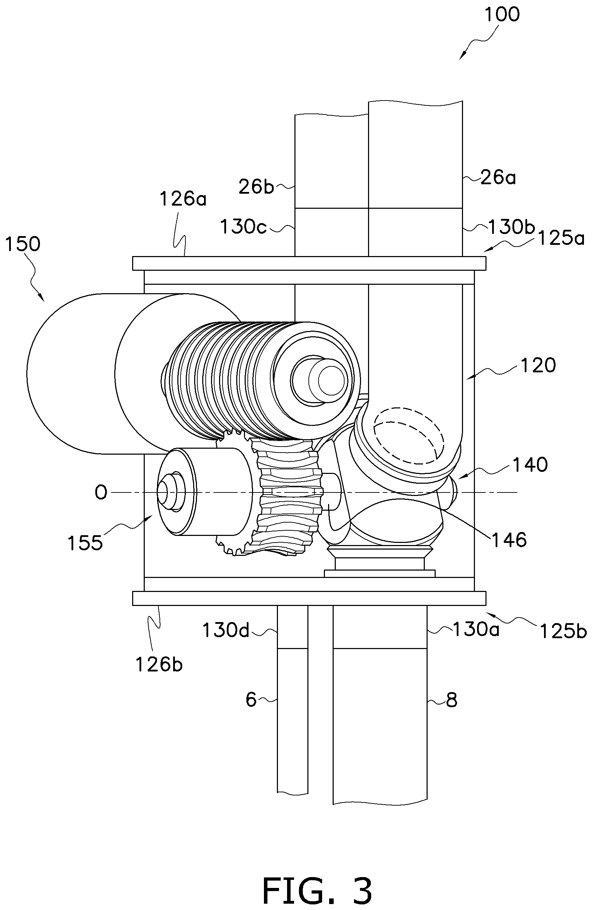

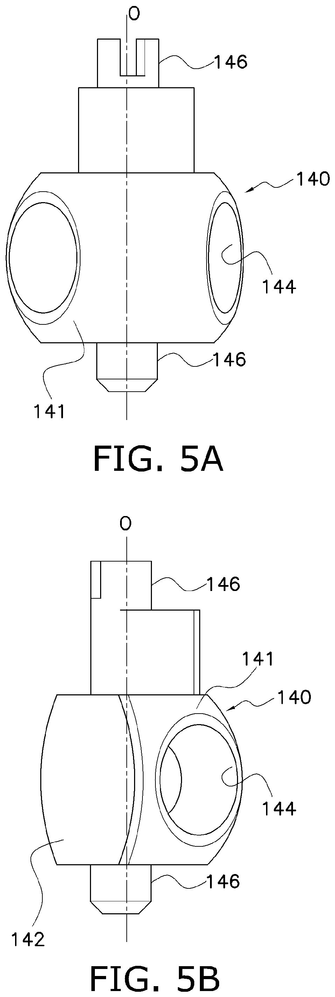

Note that the drive unit 150 that rotates the valve body 140 and the shaft 146 (a shaft attached to (integrated with) the valve body 140 to rotate the valve body 140, the shaft being supported by a bearing (not shown), see FIGS. 5A and 5B) attached to the valve body 140 and extending along the direction of the rotation axis O are connected by a transmission unit 155. In the present embodiment, as shown in FIG. 3, a worm gear is used as the transmission unit 155. However, the type of transmission mechanism used as the transmission unit 155 (the type of mechanism that transmits the force of the drive unit 150 to the shaft 146) may be appropriately selected.

The valve body 140 is rotated with respect to the body casing 120 around the rotation axis O by the drive unit 150, and the state is switched between the first state S1 and the second state S2, thereby changing the flow of the refrigerant in the flow path switching valve 100.

Specifically, the valve body 140 forms a first flow path R1 through which the refrigerant flows. In the present embodiment, the first flow path R1 includes an internal flow path 144 (surrounded by the valve body 140) formed inside the valve body 140. In the present embodiment, the valve body 140 forms a second flow path R2 different from the first flow path R1 in the first space V1. The second flow path R2 is defined by the outer surface of the valve body 140 and the wall surface 122 forming the first space V1 of the body casing 120. When the drive unit 150 rotates the valve body 140, the ports of the body casing 120 to which the first flow path R1 (internal flow path 144) and the second flow path R2 communicate are changed, so that the valve body 140 changes the flow of the refrigerant in the flow path switching valve 100.

Specifically, by rotating around the rotation axis O, the valve body 140 can take a first state S1 (see FIG. 6B) in which the first internal port 122a and the second internal port 122b are connected by the first flow path R1 and a second state S2 (see FIG. 6A) in which the first internal port 122a and the third internal port 122c are connected by the first flow path R1.

Note that, when the valve body 140 is in the first state S1, the third internal port 122c and the fourth internal port 122d are connected by the second flow path R2 (see FIG. 6B). When the valve body 140 is in the second state S2, the second internal port 122b and the fourth internal port 122d are connected by the second flow path R2 (see FIG. 6A). Note that, in the example illustrated in FIG. 6A, the flow of the refrigerant appears to be obstructed by the valve body 140 in the drawing, but actually, the refrigerant flowing in from the fourth internal port 122d flows through the space existing in front of or behind the valve body 140 in the direction perpendicular to the paper surface as the second flow path R2, and travels toward the second internal port 122b.

The valve body 140 is a ball type. The valve body being the ball shape means that at least a part of the outer surface of the valve body is a spherical surface (indicated by reference numeral 141). Although the shape of the valve body 140 is not limited, the valve body has a hemispherical shape, and has a shape in which both ends in the extending direction of the rotation axis O are cut off in a direction orthogonal to the rotation axis O. The internal flow path 144 constituting the first flow path R1 extends so as to penetrate the valve body 140 in a direction intersecting (here, orthogonal to) the rotation axis O. The spherical surface 141 of the hemispherical valve body 140, a flat surface 142 disposed on the side opposite to the spherical surface 141, and the wall surface 122 of the body casing 120 defines the second flow path R2.

A seal member 160 may be provided in each of the opening 122ao of the first internal port 122a, an opening 122bo of the second internal port 122b, and an opening 122co of the third internal port 122c, to which the internal flow path 144 (first flow path R1) of the valve body 140 is connected, so as to surround the openings 122ao, 122bo, and 122co. The seal member 160 is an annular member (packing). A material of the seal member 160 is not limited, and is made of, for example, fluororesin such as polytetrafluoroethylene (PTFE). When the valve body 140 rotates around the rotation axis O, the spherical surface 141 of the valve body 140 moves while sliding on the seal member 160. Note that the material and shape of the seal member 160 may be appropriately selected.

When the valve body 140 is in the first state S1 and the first internal port 122a and the second internal port 122b are connected by the internal flow path 144, a space between the opening 122ao of the first internal port 122a and the valve body 140 is sealed by the seal member 160 disposed so as to surround the opening 122ao of the first internal port 122a, and a space between the opening 122bo of the second internal port 122b and the valve body 140 is sealed by the seal member 160 disposed so as to surround the opening 122bo of the second internal port 122b. When the valve body 140 is in the second state S2 and the first internal port 122a and the third internal port 122c are connected by the internal flow path 144, a space between the opening 122ao of the first internal port 122a and the valve body 140 is sealed by the seal member 160 disposed so as to surround the opening 122ao of the first internal port 122a, and a space between the opening 122co of the third internal port 122c and the valve body 140 is sealed by the seal member 160 disposed so as to surround the opening 122co of the third internal port 122c.

Note that the sizes of the seal members 160 provided in the first internal port 122a, the second internal port 122b, and the third internal port 122c may be common. In particular, the inner diameter of the annular seal member 160 is preferably common to the seal members 160 provided in the first internal port 122a, the second internal port 122b, and the third internal port 122c. Further, the seal members 160 provided in the first internal port 122a, the second internal port 122b, and the third internal port 122c may be the same member(the same size and the same shape).

Note that, when the first internal port 122a, the second internal port 122b, and the third internal port 122c inside the flow path switching valve 100 are viewed along the rotation axis O (in other words, from a direction orthogonal to the first arrangement direction A1 and orthogonal to the third arrangement direction A3), at least a part of the first internal port 122a is disposed between an imaginary line K2 passing through the center C2 of the opening 122bo of the second internal port 122b in the first arrangement direction A1 and extending in the third arrangement direction A3 and an imaginary line K3 passing through the center C3 of the opening 122co of the third internal port 122c in the first arrangement direction A1 and extending in the third arrangement direction A3. More preferably, when the first internal port 122a, the second internal port 122b, and the third internal port 122c are viewed along the rotation axis O, at least a part of the first internal port 122a is disposed between an imaginary line (not shown) extending in the third arrangement direction A3 through a center (not shown) in the first arrangement direction A1 of the opening of the seal member 160 provided in the opening 122bo of the second internal port 122b and an imaginary line (not shown) extending in the third arrangement direction A3 through a center (not shown) in the first arrangement direction A1 of the opening of the seal member 160 provided in the opening 122co of the third internal port 122c.

By adopting such a structure, even when the refrigerant flows from the first port 130a to the second port 130b, or when the refrigerant flows from the third port 130c to the first port 130a, the refrigerant can flow smoothly (without greatly changing the flow direction of the refrigerant) in the flow path switching valve 100, and an increase in pressure loss in the flow path switching valve 100 can be suppressed.

In particular, preferably, the center C1 of the opening 122ao of the first internal port 122a in the first arrangement direction A1 is disposed at the center between the imaginary line K2 and the imaginary line K3 in the first arrangement direction A1. More preferably, the center of the opening of the seal member 160 provided in the opening 122ao of the first internal port 122a in the first arrangement direction A1 is disposed at the center between an imaginary line (not shown) passing through the center of the opening of the seal member 160 provided in the opening 122bo of the second internal port 122b in the first arrangement direction A1 and extending in the third arrangement direction A3 and an imaginary line (not shown) passing through the center of the opening of the seal member 160 provided in the opening 122co of the third internal port 122c in the first arrangement direction A1 and extending in the third arrangement direction A3. Further, when viewed along the rotation axis O, the rotation axis O of the valve body 140 is disposed on an imaginary line K1 passing through the center C1 and extending in the third arrangement direction A3.

By adopting such a structure, both when the refrigerant flows from the first port 130a to the second port 130b and when the refrigerant flows from the third port 130c to the first port 130a, the refrigerant can flow smoothly in the flow path switching valve 100, and an increase in pressure loss in the flow path switching valve 100 can be suppressed. Further, with such a configuration, when viewed along the rotation axis O, the structure on the second internal port 122b side of the body casing 120 can be made symmetrical to the structure on the third internal port 122c side of the body casing 120, and a structure with high sealability between the opening 122bo of the second internal port 122b and the valve body 140 and between the opening 122co of the third internal port 122c and the valve body 140 can be relatively easily achieved.

Furthermore, in the flow path switching valve 100, when the body casing 120 is viewed from the first end 125a side toward the second end 125b side of the body casing 120 in a case where the valve body 140 is in either the first state S1 or the second state S2, it is preferable that the flow of the refrigerant flowing through the internal flow path 144 and the flow of the refrigerant flowing through the second flow path R2 do not intersect with each other.

Note that, here, that the flow of the refrigerant flowing through the internal flow path 144 and the flow of the refrigerant flowing through the second flow path R2 intersect each other means that, when the second end 125b is viewed from the first end 125a, a straight line connecting the centers (the centers of the openings of the ports) of the ports (the first port 130a and the second port 130b in the first state S1) connected by the internal flow path 144 and a straight line connecting the centers (the centers of the openings of the ports) of the ports (the third port 130c and the fourth port 130d in the first state S1) connected by the second flow path R2 intersect or overlap each other.

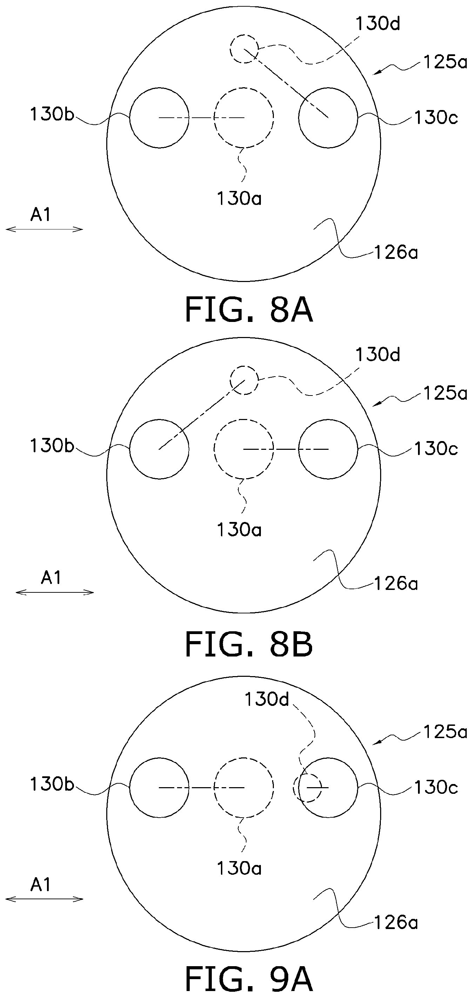

For example, in a case where the first port 130a to the fourth port 130d are arranged as in FIGS. 8A and 8B (in FIGS. 8A and 8B, the direction in which the second port 130b and the third port 130c are arranged and the direction in which the first port 130a and the fourth port 130d are arranged cross each other), a straight line connecting the centers of the ports connected by the internal flow path 144 (see a two-dot chain line in the drawing) and a straight line connecting the centers of the ports connected by the second flow path R2 (see a one-dot chain line in the drawing) do not intersect regardless of whether the valve body 140 is in the first state S1 or the second state S2. In other words, when the body casing 120 is viewed from the first end 125a side toward the second end 125b side of the body casing 120 while the valve body 140 is in either the first state S1 or the second state S2, the flow of the refrigerant flowing through the internal flow path 144 and the flow of the refrigerant flowing through the second flow path R2 do not intersect.

On the other hand, in a case where the first port 130a to the fourth port 130d are arranged as in FIGS. 9A and 9B (in FIGS. 9A and 9B, the first port 130a to the fourth port 130d are arranged on the same straight line), when the valve body 140 is in the first state S1, a straight line (see a two-dot chain line in the drawing) connecting the centers of the ports connected by the internal flow path 144 and a straight line (see a solid line in the drawing) connecting the centers of the ports connected by the second flow path R2 do not intersect (see FIG. 9A), but when the valve body 140 is in the second state S2, a straight line (see a two-dot chain line in the drawing) connecting the centers of the ports connected by the internal flow path 144 and a straight line (see a solid line in the drawing) connecting the centers of the ports connected by the second flow path R2 intersect (actually overlap). Since there are many cases in a case where the flow of the refrigerant flowing through the internal flow path 144 and the flow of the refrigerant flowing through the second flow path R2 intersect with each other, where the refrigerant flows from the internal port on one side connected by the second flow path R2 to the internal port on the other side connected by the second flow path R2 while avoiding the valve body 140 (going around the valve body 140) particularly in the second flow path R2, there is a possibility that the pressure loss in the flow path switching valve 100 becomes relatively large.

### (2-3) Control unit

The control unit 90 includes the utilization heat exchanger 22 of the heat source unit 2 and the utilization control unit of the utilization unit 4. Note that part or all of the control unit 90 may be configured by a device provided separately from the heat source unit 2 and the utilization unit 4.

The control unit 90 controls the entire operation of the air conditioner 1 by causing the control calculation device to execute a program stored in the storage device.

As indicated by a broken line in FIG. 1, the control unit 90 is electrically connected to the utilization fan 24, the flow path switching valve 100, the compressor 10, the flow path switching mechanism 12, the expansion valve 16, and the heat source fan 15. Further, the control unit 90 is also electrically connected to various sensors (not shown) that measure the temperature and pressure of the refrigerant, the temperature of the air in the air conditioning target space, the outside air temperature, and the like. The control unit 90 controls the operation of the various devices of the air conditioner 1 on the basis of the control signals received by the utilization unit 4 from an operation remote controller (not shown), measurement signals of various sensors, and the like.

The control unit 90 mainly performs cooling operation and heating operation.

### (2-3-1) Cooling operation

For example, when receiving an instruction to perform the cooling operation from the operation remote controller via the utilization unit 4, the control unit 90 brings the flow path switching mechanism 12 into the first circuit state, controls the drive unit 150 of the flow path switching valve 100 to bring the state of the valve body 140 into the second state S2 (see FIG. 6A), and starts the operation of the compressor 10. Further, the number of rotations of the motor of the compressor 10 and opening degrees of the expansion valve 16 are appropriately controlled on the basis of a measurement result of a sensor that is provided in the refrigerant circuit 50 and measures the temperature and pressure of the refrigerant.

The flow of the refrigerant in the refrigerant circuit 50 will be described with reference to FIG. 7A. When the operation of the compressor 10 is started, a gas refrigerant having a low pressure in the refrigeration cycle (hereinafter simply referred to as low pressure) is sucked into the compressor 10 and compressed by the compression mechanism of the compressor 10 to become a gas refrigerant having a high pressure in the refrigeration cycle (hereinafter simply referred to as high pressure). The high-pressure gas refrigerant is sent to the heat source heat exchanger 14 via the flow path switching mechanism 12, to exchange heat with the air around the heat source unit 2 supplied by the heat source fan 15 to be condensed, and becomes a high-pressure liquid refrigerant. The high-pressure liquid refrigerant flows through the liquid pipe 19d, passes through the expansion valve 16, and is decompressed to near the suction pressure of the compressor 10, and becomes a refrigerant in a gas-liquid two-phase state. The refrigerant decompressed by expansion valve 16 is sent to the utilization unit 4 and flows into the flow path switching valve 100. The refrigerant having flowed into the flow path switching valve 100 from the liquid connection pipe 6 via the fourth port 130d and the fourth internal port 122d flows through the second flow path R2 (indicated by the broken line in the flow path switching valve 100 in FIG. 7A), and flows into the utilization heat exchanger 22 from the first connection portion 22a via the second internal port 122b, the second port 130b, and the first pipe 26a. The refrigerant in the gas-liquid two-phase state having flowed into the utilization heat exchanger 22 exchanges heat, in the utilization heat exchanger 22, with air in the air conditioning target space supplied into the utilization heat exchanger 22 by the utilization fan 24 to be evaporated into a low-pressure gas refrigerant. The low-pressure gas refrigerant flowing out of the utilization heat exchanger 22 flows out of the second connection portion 22b and flows into the flow path switching valve 100 from the third port 130c via the second pipe 26b. The refrigerant flowing into the flow path switching valve 100 flows from the third internal port 122c through the internal flow path 144 (first flow path R1, indicated by the solid line in flow path switching valve 100 in FIG. 7A) of the valve body 140, and flows out to the gas connection pipe 8 via the first internal port 122a and the first port 130a. Then, the refrigerant is sent to the heat source unit 2 via the gas connection pipe 8, and flows into the accumulator 18 via the flow path switching mechanism 12. The low-pressure gas refrigerant having flowed into the accumulator 18 is sucked into the compressor 10 again. Note that the temperature of the air supplied to the utilization heat exchanger 22 is lowered by heat exchange with the refrigerant flowing through the utilization heat exchanger 22, and the cooled air is blown into the air conditioning target space.

### (2-3-2) Heating operation

For example, when receiving an instruction to perform the heating operation from the operation remote controller via the utilization unit 4, the control unit 90 brings the flow path switching mechanism 12 into the second circuit state, controls the drive unit 150 of the flow path switching valve 100 to bring the state of the valve body 140 into the first state S1 (see FIG. 6B), and starts the operation of the compressor 10. Further, the number of rotations of the motor of the compressor 10 and opening degrees of the expansion valve 16 are appropriately controlled on the basis of a measurement result of a sensor that is provided in the refrigerant circuit 50 and measures the temperature and pressure of the refrigerant.

The flow of the refrigerant in the refrigerant circuit 50 will be described with reference to FIG. 7B. When the compressor 10 is activated, a low-pressure gas refrigerant is sucked into the compressor 10 and is compressed by the compressor 10 into a high-pressure gas refrigerant. The high-pressure gas refrigerant is sent to the utilization unit 4 via the flow path switching mechanism 12 and flows into the flow path switching valve 100. The gas refrigerant flowing from the gas connection pipe 8 into the flow path switching valve 100 via the first port 130a and the first internal port 122a flows through the first flow path R1 (indicated by the solid line in the flow path switching valve 100 in FIG. 7B), and flows into the utilization heat exchanger 22 from the first connection portion 22a via the second internal port 122b, the second port 130b, and the first pipe 26a. The gas refrigerant sent to the utilization heat exchanger 22 exchanges heat with air in the air conditioning target space supplied to the utilization heat exchanger 22 by the utilization fan 24 to be condensed into a high-pressure liquid refrigerant. The temperature of the air supplied to the utilization heat exchanger 22 is increased by heat exchange with the refrigerant flowing through the utilization heat exchanger 22, and the heated air is blown into the air conditioning target space. The high-pressure liquid refrigerant flowing out of the utilization unit 4 flows out of the second connection portion 22b and flows into the flow path switching valve 100 from the third port 130c via the second pipe 26b. The refrigerant having flowed into the flow path switching valve 100 flows from the third internal port 122c into the second flow path R2 (indicated by the broken line in the flow path switching valve 100 in FIG. 7B), and flows out to the liquid-connection pipe 6 via the fourth internal port 122d and the fourth port 130d. The high-pressure liquid refrigerant flowing out of the liquid connection pipe 6 flows into the heat source unit 2. The refrigerant that has flowed into the heat source unit 2 flows through the liquid pipe 19d, and when flowing through the expansion valve 16, the refrigerant is decompressed to near the suction pressure of the compressor 10, becomes a refrigerant in a gas-liquid two-phase state, and flows into the heat source heat exchanger 14. The low-pressure refrigerant in the gas-liquid two-phase state that has flowed into the heat source heat exchanger 14 exchanges heat with the air around the heat source unit 2 supplied by the heat source fan 15 and evaporates to become a low-pressure gas refrigerant. The low-pressure gas refrigerant flows into the accumulator 18 via the flow path switching mechanism 12. The low-pressure gas refrigerant having flowed into the accumulator 18 is sucked into the compressor 10 again.

### (3) Characteristics

(3-1)
An air conditioner 1 according to an example of a refrigeration cycle apparatus includes the refrigerant circuit 50. In the refrigerant circuit 50, the compressor 10, the utilization heat exchanger 22 as an example of the first heat exchanger, the expansion valve 16, and the heat source heat exchanger 14 as an example of the second heat exchanger are connected by refrigerant pipes. The air conditioner 1 includes the flow path switching valve 100 and the control unit 90. The flow path switching valve 100 includes the body casing 120, the valve body 140, and the drive unit 150. The first space V1 is formed inside the body casing 120. The first port 130a, the second port 130b, the third port 130c, and the fourth port 130d configured as inlet and outlet ports for the refrigerant are provided on the outer surface 124 of the body casing 120. The valve body 140 is disposed inside the first space V1. The valve body 140 forms the first flow path R1 through which the refrigerant flows. The drive unit 150 drives the valve body 140. The control unit 90 controls the drive unit 150. The control unit 90 controls the drive unit 150 to switch the state of the valve body 140 between the first state S1 and the second state S2. When the valve body 140 is in the first state S1, the first port 130a and the second port 130b are connected by the first flow path R1. When the valve body 140 is in the second state S2, the first port 130a and the third port 130c are connected by the first flow path R1. In the second port 130b, the refrigerant always flows in the same first flow direction (first direction) B1. In the third port 130c, the refrigerant always flows in the same second flow direction (second direction) B2. The body casing 120 has the first end 125a and the second end 125b. The second port 130b and the third port 130c are disposed at the first end 125a of the body casing 120, and the first port 130a is disposed at the second end 125b of the body casing 120.

In the air conditioner 1, even when the state of the valve body 140 is switched between the first state S1 and the second state S2, the refrigerant flowing into or out of the first port 130a always flows along the same direction (vertical direction in FIGS. 6A and 6B) without reversing as shown in FIGS. 6A and 6B. Thus, in the air conditioner 1, the refrigerant flowing into or out of the first port 130a does not reverse and flow in the flow path switching valve 100, and a decrease in the Cv value associated with the refrigerant reversing and flowing in the flow path switching valve 100 can be suppressed (pressure loss can be reduced) to achieve the efficient air conditioner 1.

(3-2)
In the air conditioner 1, the first flow path R1 includes the internal flow path 144 formed inside the valve body 140. The valve body 140 forms the second flow path R2 different from the first flow path R1 in the first space V1. The internal flow path 144 connects the first port 130a and the second port 130b in the first state S1, and connects the first port 130a and the third port 130c in the second state S2. The second flow path R2 connects the third port 130c and the fourth port 130d when the valve body 140 is in the first state S1, and connects the second port 130b and the fourth port 130d when the valve body 140 is in the second state S2.

In the air conditioner 1, the second flow path R2 outside the valve body 140 is used as a refrigerant flow path in addition to the internal flow path 144 formed inside the valve body 140, so that the valve body 140 can be downsized and the compact flow path switching valve 100 can be implemented.

However, although it is preferable to use the first space V1 outside the valve body 140 as the refrigerant flow path, the second flow path R2 may also be formed inside the valve body 140 instead of inside the valve body 140. In this case, for example, the inner diameter of the fourth internal port 122d and the inner diameter of the first internal port 122a may have the same diameter, and the seal member 160 may also be provided in the fourth internal port 122d.

(3-3)
In the air conditioner 1, when the body casing 120 is viewed from the first end 125a side toward the second end 125b side of the body casing 120 while the valve body 140 is in either the first state S1 or the second state S2, the flow of the refrigerant flowing through the internal flow path 144 and the flow of the refrigerant flowing through the second flow path do not intersect.

In the air conditioner 1, by arranging the first port 130a to the fourth port 130d to satisfy the above conditions, the refrigerant easily flows smoothly (without detouring around the valve body 140), and the pressure loss in the flow path switching valve 100 can be reduced.

(3-4)
In the air conditioner 1, the body casing 120 is provided with the first internal port 122a communicating with the first port 130a, the second internal port 122b communicating with the second port 130b, and the third internal port 122c communicating with the third port 130c on the wall surface 122 defining the first space V1. When the first internal port 122a, the second internal port 122b, and the third internal port 122c are viewed from a direction orthogonal to the first arrangement direction A1 in which the second internal port 122b and the third internal port 122c are arranged side by side and orthogonal to the third arrangement direction (third direction) A3 in which the first end 125a and the second end 125b are arranged, at least a part of the first internal port 122a is disposed between an imaginary line K2 passing through the center C2 of the opening 122bo of the second internal port 122b and extending in the third arrangement direction A3 and an imaginary line K3 passing through the center C3 of the opening 122co of the third internal port 122c and extending in the third arrangement direction A3.

In the air conditioner 1, by disposing the first port 130a to the third port 130c so as to be able to satisfy the above-described state, the refrigerant can flow smoothly (without detouring) through the internal flow path 144 in the first state S1 and the second state S2, and the pressure loss in the flow path switching valve 100 can be reduced.

(3-5)
The air conditioner 1 includes the seal member 160. The seal member 160 is provided so as to surround each of the opening 122ao of the first internal port 122a, the opening 122bo of the second internal port 122b, and the opening 122co of the third internal port 122c. When the first internal port 122a, the second internal port 122b, and the third internal port 122c are connected to the internal flow path 144, the seal member 160 seals between the openings 122ao, 122bo, and 122co of the internal ports 122a, 122b, and 122c connected to the internal flow path 144 and the valve body 140.

In the air conditioner 1, when each of the internal ports 122a, 122b, and 122c is connected to the internal flow path 144 of the valve body 140, a situation in which the refrigerant flows out from the internal ports 122a, 122b, and 122c connected by the internal flow path 144 to the first space V1 around the valve body 140 or the refrigerant flows from the first space V1 around the valve body 140 to the internal ports 122a, 122b, and 122c connected by the internal flow path 144 can be suppressed, and the efficient air conditioner 1 can be achieved.

(3-6)
In the air conditioner 1, the fourth port 130d is preferably disposed at the second end 125b of the body casing 120.

In the air conditioner 1, as shown in FIGS. 6A and 6B, the refrigerant flowing into or out of the fourth port 130d always flows along the same direction (vertical direction in FIGS. 6A and 6B) between the first end 125a and the second end 125b without reversing. Thus, in the air conditioner 1, it is possible to achieve the efficient air conditioner 1 by eliminating the decrease in the Cv value of the refrigerant flowing into or out of the fourth port 130d associated with the refrigerant reversing and flowing in the flow path switching valve 100 (reducing the pressure loss).

However, it is not limited thereto, and the fourth port 130d through which the liquid refrigerant mainly flows may be provided at a place other than the second end 125b of the body casing 120, for example, on the side surface of the body casing 120 closer to the second end 125b than the first end 125a in the third arrangement direction A3.

(3-7)
In the air conditioner 1, the second port 130b and the third port 130c are arranged side by side in the first arrangement direction A1, which is an example of the fourth direction, at the first end 125a of the body casing 120. At the second end 125b of the body casing 120, the first port 130a and the fourth port 130d are arranged side by side in a direction intersecting the first arrangement direction A1. For example, without limitation, the first port 130a and the fourth port 130d are arranged side by side in the second arrangement direction A2 orthogonal to the first arrangement direction A1.

In the air conditioner 1, by arranging the first port 130a to the fourth port 130d to satisfy the above condition, the refrigerant can flow smoothly (without detouring) by the internal flow path 144 in the first state S1 and the second state S2, and the pressure loss in the flow path switching valve 100 can be reduced.

(3-8)
In the air conditioner 1, the drive unit 150 rotates the valve body 140 around the rotation axis O to switch the state of the valve body 140 between the first state S1 and the second state S2.

In the air conditioner 1, the connection state of different flow paths can be implemented by the flow path switching valve 100 having a relatively simple structure.

(3-9)
In the air conditioner 1, the inner diameter D2 of the fourth port 130d is smaller than the inner diameter D1 of the first port 130a.

In the air conditioner 1, since the inner diameter D2 of the fourth port 130d is smaller than that of the first port 130a, the degree of freedom in arrangement of the fourth port 130d can be increased. Further, by reducing the diameter of the refrigerant pipe communicating with the fourth port 130d in accordance with the inner diameter of the fourth port 130d, the degree of freedom of the pipe path of the refrigerant pipe connected to the flow path switching valve 100 can be increased.

(3-10)
In the air conditioner 1, the second port 130b and the third port 130c are disposed on a flat surface (first end surface 126a) provided at the first end 125a of the body casing 120.

In the air conditioner 1, by disposing the second port 130b and the third port 130c on the same flat surface, the routing of the pipes connected to the second port 130b and the third port 130c can be simplified.

Note that, as long as the second port 130b and the third port 130c are arranged side by side on the first end side of the body casing, the installation place is not limited to a flat surface. The second port 130b and the third port 130c may be arranged on a curved surface (for example, arranged one above the other in the vertical direction on a side surface of the body casing 120). The first port 130a (preferably also the fourth port 130d) may be disposed on the back side of the position where the second port 130b and the third port 130c are provided in the body casing 120.

(3-11)
In the air conditioner 1, the second port 130b communicates with the first connection portion 22a configured as an inlet port for the refrigerant of the utilization heat exchanger 22 in which heat is exchanged between the refrigerant flowing inside and air in the air conditioning target space. The third port 130c communicates with the second connection portion 22b configured as an outlet port for the refrigerant of the utilization heat exchanger 22. The utilization heat exchanger 22 and the flow path switching valve 100 are housed in the housing 4a.

As a general technical problem, the housing 4a of the utilization unit 4 is desired to be as compact as possible. If the routing of pipes connecting the utilization heat exchanger 22 and the flow path switching valve 100 becomes complicated, it may be difficult to make the housing 4a compact.

On the other hand, in the air conditioner 1, since the second port 130b and the third port 130c are disposed at the same end (first end 125a) of the body casing 120, the routing of the pipe connecting the utilization heat exchanger 22 and the flow path switching valve 100 can be simplified. Thus, it is also possible to suppress an increase in size of the housing 4a that houses the utilization heat exchanger 22 and the flow path switching valve 100.

(3-12)
The flow path switching valve 100 includes the body casing 120 and the valve body 140. The first space V1 is formed inside the body casing 120. The first port 130a, the second port 130b, and the third port 130c configured as inlet and outlet ports for the refrigerant, which is an example of a medium, are provided on the outer surface 124 of the body casing 120. The valve body 140 is disposed inside the first space V1. The state of the valve body 140 is switched between the first state S1 and the second state S2. When the state of the valve body 140 is in the first state S1, the first port 130a and the second port 130b are connected. When the state of the valve body 140 is in the second state S2, the first port 130a and the third port 130c are connected. The second port 130b and the third port 130c are disposed at the first end 125a of the body casing 120. The first port 130a is disposed at the second end 125b of the body casing 120.

In the flow path switching valve 100, the refrigerant flowing into or out of the first port 130a does not reverse and flow in the flow path switching valve 100, and an increase in pressure loss associated with the refrigerant reversing and flowing in the flow path switching valve 100 can be suppressed.

(3-13)
In the flow path switching valve 100, the second port 130b and the third port 130c are disposed on the first surface 126a provided at the first end 125a of the body casing 120. The first port 130a and the fourth port 130d are disposed on the second surface 126b provided at the second end 125b of the body casing 120. The drive unit 150 is disposed on a surface (side surface 121 of the tubular body casing 120 in the present embodiment) different from the first surface 126a and the second surface 126b of the outer surface 124 of the body casing 120.

This configuration can achieve a compact flow path switching valve 100.

### (4) Modifications

Modifications of the above embodiment will be described below. The following modifications may be appropriately combined as long as there is no contradiction.

### (4-1) Modification A

As the flow path switching mechanism 12 in the above embodiment, a flow path switching valve having a structure similar to that of the flow path switching valve 100 may be used. When a flow path switching valve with a structure similar to that of the flow path switching valve 100 is used for the flow path switching mechanism 12, for example, the suction pipe 19a is connected to the second port, the discharge pipe 19b is connected to the third port, the first gas pipe 19c is connected to the first port, and the liquid pipe 19d is connected to the fourth port. As the diameter of a port, a dimension suitable for use as the flow path switching mechanism 12 may be selected.

### (4-2) Modification B

In the above embodiment, an example has been described in which the valve body 140 of the flow path switching valve 100 is a ball type, and the state of the valve body 140 is changed by rotating the valve body 140. However, the present disclosure is not limited to this configuration.

For example, the flow path switching valve may include, as a valve body, a plurality of plates in which holes serving as the first flow path R1 and notches serving as the second flow path R2 are formed, and the plurality of plates may be rotated around a rotation axis orthogonal to the plates to change a relative positional relationship between the holes and the notches of the plurality of plates, thereby implementing the connection state by the first flow path R1 and the second flow path R2 between the ports as described above (the flow path switching valve may be a revolver type). In addition, the flow path switching valve may include, as a valve body, a plurality of plates in which holes serving as the first flow path R1 and notches serving as the second flow path R2 are formed, and slide the plurality of plates to change a relative positional relationship between the holes and the notches of the plurality of plates, thereby implementing the connection state by the first flow path R1 and the second flow path R2 between the ports as described above.

### (4-3) Modification C

In the above embodiment, the example in which the flow path switching valve 100 is provided in the utilization unit 4 has been described, but the position where the flow path switching valve 100 is installed is not limited to the inside of the utilization unit 4. The flow path switching valve 100 may be provided in the heat source unit 2, or may be provided in the connection pipes 6 and 8 separately from the heat source unit 2 and the utilization unit 4.

### (4-4) Modification D

In the above embodiment, an example in which the internal flow path 144 formed inside the valve body 140 of the flow path switching valve 100 functions as the first flow path R1 has been described. However, it is not limited thereto, and at least a part of the first flow path R1 may be a path defined by the valve body 140 and the wall surface 122 of the body casing 120 and separated from the second flow path R2.

### <Supplementary note>

The embodiment of the present disclosure has been described above. It will be understood that various changes to modes and details can be made without departing from the gist and scope of the present disclosure recited in the claims.

### REFERENCE SIGNS LIST

- 1: Refrigeration cycle apparatus
- 4a: Housing
- 10: Compressor
- 14: Heat source heat exchanger (second heat exchanger)
- 16: Expansion valve
- 22: Utilization heat exchanger (first heat exchanger)
- 22a: First connection portion
- 22b: Second connection portion
- 50: Refrigerant circuit
- 90: Control unit (control device)
- 100: Flow path switching valve
- 120: Body casing
- 121: Side surface (surface)
- 122: Wall surface
- 122a: First internal port
- 122ao: Opening
- 122b: Second internal port
- 122bo: Opening
- 122c: Third internal port
- 122co: Opening
- 122d: Fourth internal port
- 124: Outer surface
- 125a: First end
- 125b: Second end
- 126a: First end surface (flat surface)
- 126b: Second end surface (flat surface)
- 130a: First port
- 130b: Second port
- 130c: Third port
- 130d: Fourth port
- 140: Valve body
- 141: Spherical surface
- 144: Internal flow path
- 150: Drive unit
- 160: Seal member
- A1: First arrangement direction (direction in which second and third internal ports are arranged side by side, fourth direction)
- A2: Second arrangement direction (direction intersecting fourth direction)
- A3: Third arrangement direction (third direction)
- B1: First flow direction (first direction)
- B2: Second flow direction (second direction)
- C2: Center of opening of second internal port
- C3: Center of opening of third internal port
- D1: Inner diameter of first port
- D2: Inner diameter of fourth port
- K2: Imaginary line passing through center of opening of second internal port
- K3: Imaginary line passing through center of opening of third internal port
- O: Rotation axis
- R1: First flow path
- R2: Second flow path
- S1: First state
- S2: Second state
- V1: First space

### CITATION LIST

### PATENT LITERATURE

Patent Literature 1: Japanese Laid-Open Patent Publication No. 2010-112517 A

## Claims

1. A flow path switching valve (100) comprising:
a body casing (120) having a first end (125a) and a second end (125b), in which a first space (V1) is formed inside, and a first port (130a), a second port (130b), and a third port (130c) configured as inlet and outlet ports for a medium are provided on an outer surface (124); and
a valve body (140) that is disposed inside the first space and is switched between a first state (S1) in which the first port and the second port are connected and a second state (S2) in which the first port and the third port are connected, wherein
the second port and the third port are disposed at the first end of the body casing, and the first port is disposed at the second end of the body casing.

2. The flow path switching valve according to claim 1, wherein
a first internal port (122a) communicating with the first port, a second internal port (122b) communicating with the second port, and a third internal port (122c) communicating with the third port are provided on a wall surface (122) defining the first space of the body casing, and
when the first internal port, the second internal port, and the third internal port are viewed from a third direction (A2) orthogonal to a first direction (A1) in which the second internal port and the third internal port are arranged side by side and orthogonal to a second direction (A3) in which the first end and the second end are arranged, at least a part of the first internal port is disposed between an imaginary line (K2) passing through a center (C2) of an opening of the second internal port and extending in the second direction and an imaginary line (K3) passing through a center (C3) of an opening of the third internal port and extending in the second direction.

3. The flow path switching valve according to claim 2, wherein
the valve body forms a first flow path through which the medium flows, and
the first flow path includes an internal flow path (144) formed inside the valve body, and
the flow path switching valve further includes a seal member (160) that is provided so as to surround each of an opening (122ao) of the first internal port, an opening (122bo) of the second internal port, and an opening (122co) of the third internal port, and configured to seal between the opening and the valve body when the first internal port, the second internal port, and the third internal port are connected to the internal flow path.

4. The flow path switching valve according to claim 1 or 2, wherein
a fourth port configured as an inlet and outlet port for the medium is further provided on the outer surface of the body casing,
the valve body forms a first flow path (R1) and a second flow path (R2) through which the medium flows,
the first flow path connects the first port and the second port when the valve body is in the first state, and connects the first port and the third port when the valve body is in the second state, and
the second flow path connects the fourth port and the third port when the valve body is in the first state, and connects the fourth port and the second port when the valve body is in the second state.

5. The flow path switching valve according to claim 4, wherein
the first flow path includes an internal flow path (144) formed inside the valve body, and
the second flow path is formed in the first space.

6. The flow path switching valve according to claim 4 or 5, wherein
the fourth port is provided at the second end of the body casing.

7. The flow path switching valve according to claim 6, wherein
the second port and the third port are arranged side by side in a fourth direction at the first end of the body casing, and the first port and the fourth port are arranged side by side in a direction intersecting the fourth direction at the second end of the body casing.

8. The flow path switching valve according to any one of claims 4 to 7, wherein
an inner diameter of the fourth port is smaller than an inner diameter of the first port.

9. The flow path switching valve according to any one of claims 4 to 8, wherein
the body casing has a tubular shape having a first surface provided at the first end and a second surface provided at the second end,
the second port and the third port are disposed on the first surface, and
the first port and the fourth port are disposed on the second surface.

10. The flow path switching valve according to any one of claims 4 to 8, further comprising:
a drive unit (150) configured to drive the valve body to switch a state of the valve body between the first state and the second state,
the second port and the third port are disposed on a first surface (126a) provided at the first end of the body casing,
the first port and the fourth port are disposed on a second surface (126b) provided at the second end of the body casing, and
the drive unit is disposed on a surface different from the first surface and the second surface of the outer surface of the body casing.

11. The flow path switching valve according to any one of claims 1 to 9, further comprising:
a drive unit (150) configured to drive the valve body to switch a state of the valve body between the first state and the second state.

12. The flow path switching valve according to claim 10 or 11, wherein
the drive unit is configured to rotate the valve body around a rotation axis (O) to switch a state of the valve body between the first state and the second state.

13. The flow path switching valve according to any one of claims 1 to 12, wherein
the valve body has a ball shape in which at least a part of an outer surface is a spherical surface (141).
